# EUROPÄISCHE PATENTSCHRIFT

(11) **EP 3 194 746 B1**
(45) Veröffentlichungstag und Bekanntmachung des Hinweises auf die Patenterteilung: **03.04.2019**
(21) Anmeldenummer: 15741975.5
(22) Anmeldetag: 17.07.2015
(51) Int. Cl.: F02B 37/16, F16K 31/06, H01F 7/129

(54) **SCHUBUMLUFTVENTIL FÜR EINEN VERDICHTER EINES VERBRENNUNGSMOTORS**
OVERRUN AIR RECIRCULATION VALVE FOR A COMPRESSOR OF AN INTERNAL COMBUSTION ENGINE
SOUPAPE DE SURPRESSION POUR COMPRESSEUR D'UN MOTEUR À COMBUSTION INTERNE

(30) Priorität: 19.09.2014 DE 102014113551
(43) Veröffentlichungstag der Anmeldung: 26.07.2017
(73) Patentinhaber: Pierburg GmbH, 41460 Neuss (DE)
(72) Erfinder: LENK, Martin, 41470 Neuss (DE); MANDJERALO, Daniel, 40549 Düsseldorf (DE); PAUL, Oliver, 45896 Gelsenkirchen (DE); SCHMITZ, Helmut, 41469 Rommerskirchen (DE)
(74) Vertreter: Patentanwälte ter Smitten Eberlein-Van Hoof Rütten Partnerschaftsgesellschaft mbB
(86) Internationale Anmeldenummer: PCT/EP2015/066454
(87) Internationale Veröffentlichungsnummer: WO 2016/041660

(56) Entgegenhaltungen:
- EP-A2- 1 655 465
- EP-B1- 1 941 138
- WO-A1-98/26168
- DE-A1-102005 034 939

## Beschreibung

Die Erfindung betrifft ein Schubumluftventil für einen Verdichter eines Verbrennungsmotors mit einem Strömungsgehäuse mit einem Einlass und einem Auslass, einem elektromagnetischen Aktor, der in einem Aktorgehäuse angeordnet ist, einem Regelkörper, der mittels des Aktors bewegbar ist, einem Gehäuseinnenraum, in dem ein Anker des elektromagnetischen Aktors bewegbar ist, Öffnungen im Regelkörper, über die der Gehäuseinnenraum mit einem durch den Regelkörper verschließbaren Kanal im Strömungsgehäuse fluidisch verbunden ist, und einem Anschlussgehäuse, welches axial gegen den Aktor anliegt und zumindest teilweise den Gehäuseinnenraum begrenzt.

Schubumluftventile zur Rezirkulation von verdichtetem Frischgas gegebenenfalls mit rezirkuliertem Abgas von der Druckseite eines Verdichters eines Turboladers zurück zur Saugseite des Verdichters sind hinlänglich bekannt. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Schubumluftventile werden häufig elektromagnetisch betätigt, wobei der Ventilschließkörper des Ventils über den Anker durch die elektromagnetische Kraft bewegt wird und auf einem Ventilsitz absenkbar und von diesem abhebbar ist, der in einem Strömungsgehäuse zwischen einem Einlass und einem Auslass des Verdichters ausgebildet ist. Bei diesen Schubumluftventilen ist ein sehr schnelles Schalten aufgrund der sich schnell ändernden Lastzustände des Verdichters erforderlich. Aus diesem Grund werden die meisten Schubumluftventile druckausgeglichen ausgeführt, indem im Regelkörper Öffnungen ausgebildet werden, über die der am Regelkörper von unten anliegende Druck in den Innenraum des Ventils geleitet wird, wobei die wirksamen Durchmesser auf beiden axialen Seiten des Regelkörpers ebenfalls gleich gewählt werden. Entsprechend wirkt lediglich die Kraft einer in Schließrichtung wirkenden Feder sowie die in Öffnungsrichtung wirkende Kraft des Elektromagneten auf den Regelkörper. Bei korrekter Auslegung werden hierdurch sehr kurze Schließ- und Öffnungszeiten erreicht.

Ein solches Ventil ist beispielsweise aus der EP 1 941 138 B1 bekannt. Der elektromagnetische Aktor dieses Schubumluftventils ist von einem Kunststoffgehäuse umgeben, gegen welches ein Anschlussgehäuse anliegt, in dessen inneren der Regelkörper aufgenommen ist. Zwischen den beiden Gehäusen ist eine Nut am Anschlussgehäuse ausgebildet, in welche ein Dichtring eingelegt werden kann, so dass kein im Innenraum vorhandenes Gas durch den Spalt zwischen den Gehäusen nach außen dringen kann. Des Weiteren liegt das Aktorgehäuse unter Zwischenlage eines Dichtrings gegen ein Strömungsgehäuse an, in dem der den Einlass und den Auslass des Verdichters verbindende Kanal ausgebildet ist. Problematisch an einem solchen Ventil ist es jedoch, dass die Spule nicht ausreichend vor einem Eindringen des Schmutzstoffe und Öl enthaltenden vom Verdichter geförderten Gases geschützt ist. Dieses Gas kann sowohl entlang des Ankers zwischen der Gleitbuchse und dem Spulenträger sowie dem Rückschlussblech und dem Spulenträger in die Spule dringen als auch zwischen den beiden Gehäusen axial im Bereich zwischen den beiden dichtringen eindringen. Dies führt zu einer erhöhten Korrosionsgefahr an der Spule. Im Übrigen müssen die Einzelteile montiert werden und es entsteht ein störendes Geräusch beim Öffnen des Ventils, wenn der Regelkörper gegen das Aktorgehäuse anschlägt.

Es stellt sich daher die Aufgabe, ein Schubumluftventil zur Verfügung zu stellen, bei dem die Spule zuverlässig vor einem Eindringen von Schmutzstoffen enthaltenden Gas geschützt wird. Das Ventil soll einfach und kostengünstig aufgebaut ist, um Herstell- und Montagekosten zu reduzieren. Hierzu soll die Anzahl an zu montierenden Bauteilen reduziert werden. Auch soll das Schubumluftventil möglichst geräuscharm geschaltet werden können und dennoch dessen Funktionsfähigkeit sowie ein schnelles Öffnen und Schließen des Ventils sichergestellt werden.

Diese Aufgaben werden durch ein Schubumluftventil für einen Verdichter eines Verbrennungsmotors mit den Merkmalen des Hauptanspruchs 1 gelöst.

Dadurch, dass am Anschlussgehäuse ein erster Dichtring angeordnet ist, der gegen den Aktor anliegt und ein zweiter Dichtring angeordnet ist, der auf der axial gegenüberliegenden Seite des Anschlussgehäuses gegen das Strömungsgehäuse anliegt, und dass an der zum Regelkörper weisenden axialen Seite des Anschlussgehäuses ein elastischer Kunststoffring angeordnet ist, dessen Durchmesser dem Durchmesser des Regelkörpers entspricht, kann weder aus dem anliegenden Strömungsgehäuse entlang der Außenseite des Ventils verschmutztes Gas zur Spule oder nach außen gelangen, noch kann dieses Gas über den Gehäuseinnenraum und den Spalt zwischen dem Anschlussgehäuse und dem Aktor zur Spule gelangen. Es wird somit auf einfache Weise eine gute Abdichtung der Spule hergestellt. Der Kunststoffring dient als Anschlagfläche für den Regelkörper im geöffneten Zustand. Durch die Elastizität des Anschlags wird dieser gedämpft, so dass entstehende Geräusche sowie die mechanische Belastung des Anschlussgehäuses und des Regelkörpers vermindert werden.

Vorzugsweise ist der erste Dichtring innerhalb einer radialen Erstreckung eines Rückschlussblechs angeordnet, welches am zum Regelkörper weisenden Ende des Aktors angeordnet ist und magnetisch mit einem Joch des Aktors verbunden ist und der zweite Dichtring ist radial außerhalb des Regelkörpers angeordnet. Durch diese Lage des ersten Dichtrings wird der Spalt vor der Fuge zwischen Joch und Rückschlussblech abgedichtet, so dass ein Eindringen des Gases in diese Fuge verhindert wird. Der zweite Dichtring dichtet bei dieser Anordnung in beide Richtungen eine Trennfuge zwischen dem Schubumluftventil und dem Strömungsgehäuse.

Besonders vorteilhaft ist es, wenn der erste Dichtring gegen einen Kragen einer Führungshülse anliegt, die den Gehäuseinnenraum innerhalb des Aktorgehäuses begrenzt. Durch die Anlage des Dichtrings an der Führungshülse kann auch kein Gas mehr aus dem Ankerraum in Richtung der Spule dringen, so dass ein vollständig zum Aktor abgedichteter Gehäuseinnenraum geschaffen wird.

Eine besonders kostengünstige Herstellung wird erreicht, indem die Dichtringe und/oder der elastische Kunststoffring am Anschlussgehäuse angespritzt sind. Dies , erleichtert zusätzlich die Montage durch Reduzierung der zu montierenden Bauteile.

In einer besonders günstigen Ausbildung der Erfindung ist zwischen dem ersten Dichtring und dem elastischen Kunststoffring mindestens ein Verbindungskanal ausgebildet, welcher das Anschlussgehäuse durchdringt. Auf diese Weise kann der flüssige oder pastöse Kunststoff von einer axialen Seite in beide Nuten zur gleichzeitigen Erzeugung des Kunststoffrings und des ersten Dichtrings eingebracht werden.

Vorzugsweise ist das Anschlussgehäuse mit den Dichtringen und/oder dem Kunststoffring ein 2-Komponenten-Kunststoff-Spritzgießteil. Hierdurch wird auf einfache und kostengünstige Weise ein einziges Bauteil geschaffen, wodurch weitere Montageschritte entfallen.

Des Weiteren ist es vorteilhaft, das Anschlussgehäuse aus einem laserlichtdurchlässigen Kunststoff herzustellen und mit dem Aktorgehäuse mittels Laserschweißen zu verbinden, wobei die Laserschweißnaht radial zwischen den beiden Dichtringen angeordnet ist. So kann das gesamte Ventil als ein Stück in das Strömungsgehäuse eingesetzt werden. Des Weiteren wird ein Eindringen von Flüssigkeit von außen in Richtung der Spule verhindert, so dass die Spule des Schubumluftventils sowohl von außen als auch von innen vollständig vor dem Eindringen von Fremdstoffen geschützt ist.

Alternativ oder zusätzlich ist es möglich, am Anschlussgehäuse einen dritten Dichtring auszubilden, der gegen das Aktorgehäuse anliegt. Auch dieser dritte Dichtring dichtet den Spalt zwischen dem Aktorgehäuse und dem Anschlussgehäuse in Richtung der Spule ab, so dass kein Eindringen von Flüssigkeiten oder anderen Stoffen von außen in die Spule möglich ist.

Besonders vorteilhaft ist es, wenn der dritte Dichtring einstückig mit dem zweiten Dichtring über einen Außenumfang eines Grundkörpers des Anschlussgehäuses angespritzt ist. Entsprechend können alle Dichtringe von einer Seite eingebracht werden.

Vorzugsweise ragt der zweite Dichtring über mindestens eine Durchgangsöffnung im Anschlussgehäuse zur axial gegenüberliegenden Seite eines Grundkörpers des Anschlussgehäuses. So kann der Dichtring von der gleichen Seite wie der erste Dichtring angespritzt werden. Auch kann der dritte Dichtring einstückig mit dem zweiten Dichtring hergestellt werden, indem die Durchgangsöffnung zwischen dem dritten Dichtring und dem zweiten Dichtring ausgebildet wird. Diese beiden Dichtringe können dann von der gleichen Seite wie der erste Dichtring beim Spritzguss eingebracht werden.

Bei diesen Ausführung ist es vorteilhaft, wenn am Anschlussgehäuse eine zum Aktorgehäuse gerichtete ringförmige Ausnehmung ausgebildet ist, in die ein ringförmiger Vorsprung des Aktorgehäuses ragt, wobei die Laserschweißnaht oder der dritte Dichtring zwischen der Ausnehmung und dem Vorsprung angeordnet ist. Dies vereinfacht die Montage, da die beiden Gehäuse mit dieser Ausführung radial zueinander positioniert werden. Des Weiteren wird der vom Laser zu durchdringende Materialabschnitt kurz gehalten.

In einer bevorzugten Ausbildung der Erfindung ist am Grundkörper des Anschlussgehäuses ein sich in Richtung des Regelkörpers axial erstreckender ringförmiger Vorsprung ausgebildet, der von einer Feder radial umgeben ist, die vorgespannt axial zwischen dem Grundkörper und dem Regelkörper angeordnet ist. Die Feder dient der Rückstellung des Regelkörpers auf den Ventilsitz beim Abschalten der Versorgungsspannung der Spule. Der Vorsprung dient zur Lagefixierung der Feder im Regelkörper. Eine weitere Befestigung der Feder ist somit nicht erforderlich.

Vorzugsweise ist am Anschlussgehäuse eine ringförmige sich axial in Richtung des Regelkörpers erstreckende Gehäusewand ausgebildet, die radial von einem Stützring umgeben ist, auf dem eine Dichtung angeordnet ist, die radial innen gegen den Regelkörper und radial außen gegen die Gehäusewand anliegt. Die Gehäusewand dient zur Begrenzung des Gehäuseinnenraums und wird über die Dichtung abgedichtet, so dass ein Druckausgleich zwischen der Oberseite und der Unterseite des Regelkörpers geschaffen wird.

Um den Stützring möglichst einfach am Anschlussgehäuse befestigen zu können, ohne zusätzliche Befestigungselemente montieren zu müssen, weist die Gehäusewand in dem die Dichtung umgebenden Bereich eine Einschnürung und am vom Aktorgehäuse abgewandten axialen Ende eine radiale Erweiterung auf, an der der Stützring festgeklemmt ist. Die Gehäusewand ist somit leicht federnd verformbar, so dass der Stützring aufgeschoben werden kann und durch die Erweiterung in dieser Position gehalten wird.

Es wird somit ein Schubumluftventil für einen Verdichter eines Verbrennungsmotors geschaffen, welcher sowohl eine hohe Dichtigkeit der Spule gegenüber von innen oder außen eindringenden Medien aufweist als auch geräuscharm arbeitet. Das erfindungsgemäße Schubumluftventil arbeitet geräuscharm und ist kostengünstig herzustellen und zu montieren. Zusätzlich wird ein sicherer Druckausgleich zum schnellen Öffnen und Schließen des Ventils geschaffen.

Ein Ausführungsbeispiel eines erfindungsgemäßen Schubumluftventils für einen Verdichter eines Verbrennungsmotors ist in den Figuren dargestellt und wird nachfolgend beschrieben.
Figur 1 zeigt eine Seitenansicht eines erfindungsgemaßen Schubumluftventils in geschnittener Darstellung.

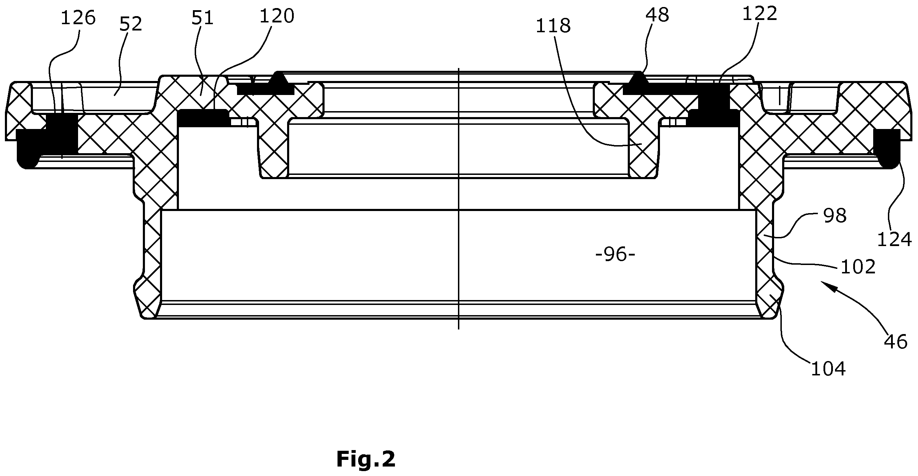

Figur 2 zeigt eine Seitenansicht des Anschlussgehäuses des erfindungsgemäßen Schubumluftventils in geschnittener Darstellung.

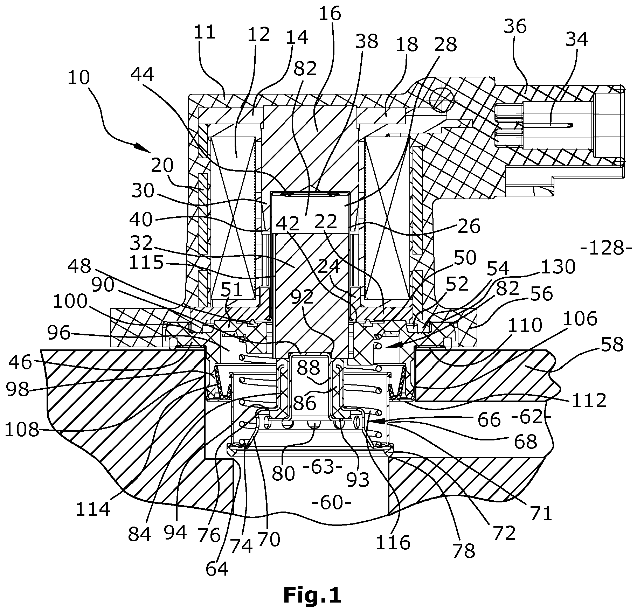

Das in der Figur 1 dargestellte, erfindungsgemäße Schubumluftventil besteht aus einem elektromagnetischen Aktor 10 mit einem Aktorgehäuse 11, in dem eine Spule 12 auf einem Spulenträger 14 angeordnet ist. Im radial inneren Bereich des Spulenträgers 14 ist ein magnetisierbarer Kern 16 befestigt, dessen axiales Ende über den Spulenträger 14 hinausragt, wobei der Kern 16 an diesem axialen Ende von einem Rückschlussblech 18 umgeben ist, welches in Verbindung mit einem die Spule 12 umgebenden Joch 20 steht. Am zum Kern 16 entgegengesetzten Ende des Spulenträgers 14 befindet sich ein weiteres Rückschlussblech 22, welches im radial äußeren Bereich mit dem Joch 20 in Kontakt steht und einen inneren axialen Erstreckungsabschnitt 24 aufweist, der sich in den Spulenträger 14 erstreckt.

Im radial Inneren dieses axialen Erstreckungsabschnitts 24 ist eine Führungshülse 26 angeordnet, welche sich bis in eine zentrale Ausnehmung 28 des Kerns 16, welche von einem radial äußeren und sich axial erstreckenden ringförmigen Vorsprung 30 des Kerns 16 umgeben ist, erstreckt und in der ein Anker 32 gelagert ist. Die Spule 12 wird über Leitungen 34, die in einem Stecker 36 münden, mit Strom versorgt.

Die Führungshülse 26 weist eine offene Seite, in die der Anker 32 ragt und eine durch einen Boden 38 geschlossene Seite auf, wobei sich vom Boden 38 im radial äußeren Bereich eine zylinderförmige Wandfläche 40 erstreckt, welche als Lagerfläche bei der Bewegung des Ankers dient. Vom offenen zum Boden 38 gegenüberliegenden axialen Ende der Führungshülse 26 erstreckt sich ein ringförmiger Kragen 42 nach radial außen. Der Boden 38 ist als flache Fläche mit einer symmetrisch zur Mittelachse ausgebildeten ringförmigen Wölbung 44 ausgebildet, die in Richtung des Inneren der Führungshülse 26 gerichtet ist und als Anschlag für den Anker 32 im bestromten Zustand dient.

Der Kragen 42 der Führungshülse 26 liegt an der vom Kern 16 abgewandten Seite axial gegen die flache Seite des zweiten Rückschlussblechs 22 an, die sich in Richtung des Jochs 20 erstreckt. Der Kragen 42 und mit ihm die gesamte Führungshülse 26 wird über ein Anschlussgehäuse 46 unter Zwischenlage eines ersten Dichtrings 48 aus einem Elastomer gegen das Rückschlussblech 22 gedrückt, wobei der Dichtring 48 elastisch verformt wird, so dass ein Spalt 50 zwischen dem Rückschlussblech 22 und dem Anschlussgehäuse 46 nach außen hin abgedichtet wird. Dieser Dichtring 48 wird an das Anschlussgehäuse 46 im Zwei-Komponeriten-Spritzverfahren angespritzt.

Das Anschlussgehäuse 46 weist an seinem im Wesentlichen plattenförmigen Grundkörper 51, mit der das Anschlussgehäuse 46 am Aktorgehäuse 11 anliegt eine ringförmige Ausnehmung 52 auf, in die ein zum Anschlussgehäuse 46 weisender ringförmiger Vorsprung 54 des Aktorgehäuses 11 ragt. Dieser ringförmige Vorsprung 54 weist einen Durchmesser auf, der geringfügig größer ist als der Außendurchmesser der Rückschlussbleche 18, 22. Ein radial weiter außen liegender ringförmiger Vorsprung 56 des Aktorgehäuses 11 umgreift den Grundkörper 51 des Anschlussgehäuses 46 und dient zur Befestigung des Schubumluftventils an einem Strömungsgehäuse 58, in dem ein einen Einlass 60 mit einem Auslass 62 verbindender Kanal 63 ausgebildet ist, wobei zwischen Einlass 60 und auslass 62 im Strömungsgehäuse ein den Kanal 63 umgebender Ventilsitz 64 ausgebildet ist, auf dem im geschlossenen Zustand des Ventils ein Regelkörper 66 aufliegt, über den ein Durchströmungsquerschnitt 68 des Kanals 63 geregelt wird.

Der Regelkörper 66 besteht aus einem ersten Hohlkörper 68 und einem zweiten Hohlkörper 70, der im radial Inneren des ersten Hohlkörpers 68 angeordnet ist. Der erste Hohlkörper 68 weist eine über den Umfang geschlossene zylindrische Mantelfläche 71 auf, an deren vom Anker 32 weg weisenden Ende eine ringförmige Platte 72 ausgebildet ist, die sich radial nach innen erstreckt. Der zweite Hohlkörper 70 weist eine radial äußere ringförmige Platte 74 auf, die mittels Schweißen an der ringförmigen Platte 72 befestigt ist und von deren Innenumfang aus sich eine Mantelfläche 76 in den inneren Bereich des ersten Hohlkörpers 68 erstreckt. Im radial äußeren Bereich der ringförmigen Platte 74 des zweiten Hohlkörpers 70 ist ein Dichtring 78 angespritzt, dessen wirksamer Durchmesser zur Auflage auf dem Ventilsitz 64 dem Durchmesser der zylindrischen Mantelfläche 70 des ersten Hohlkörpers 68 entspricht.

In der Mantelfläche 76 des zweiten Hohlkörpers 70 zehn Öffnungen 80 ausgebildet, über die der Einlass 60 des Strömungsgehäuses 58 mit einem Gehäuseinnenraum 82 fluidisch stetig verbunden ist, der durch den ersten Hohlkörper 68, das Anschlussgehäuse 46 und die Führungshülse 26 begrenzt ist, so dass Querschnittsfläche, auf die der Druck im Gehäuseinnenraum 82 in Schließrichtung des Schubumluftventils wirkt, gleich der Querschnittsfläche des Regelkörpers 66 ist, auf die der Druck einlassseitig in Öffnungsrichtung des Schubumluftventils wirkt.

Ein zum Anker 32 weisender zylindrischer Abschnitt 84 des zweiten Hohlkörpers 70 ist mit einem Elastomer 86 umspritzt, welches gegen den Anker 32 anliegt. Um den Regelkörper 66 am Anker 32 zu befestigen, wird ein Verbindungselement 88 verwendet, welches im Wesentlichen topfförmig ausgebildet und dessen Boden 90 in einer zentralen kreisförmigen Ausnehmung 92 am axialen Ende des Ankers 32 durch Schweißen befestigt ist. Das Verbindungselement 88 ist im Wesentlichen radial innerhalb des Elastomers 86 angeordnet und weist an der zum Boden 90 entgegengesetzten Seite eine radiale Erweiterung 93 auf, die axial gegen das Elastomer 86 anliegt, dessen axial entgegengesetztes Ende gegen eine Einschnürung 94 des zweiten Hohlkörpers 70 anliegt, so dass dieser und mit ihm der erste Hohlkörper am Anker 32 befestigt ist und mit dem Anker 32 bewegt wird.

Im Anschlussgehäuse 46 ist ein Raum 96 ausgebildet, in den der Regelkörper 66 bei Betätigung des Ventils eintauchen kann. Dieser Raum 96 wird radial durch eine sich axial erstreckende ringförmige Gehäusewand 98 des Anschlussgehäuses 46 begrenzt, die radial innerhalb der ringförmigen Ausnehmung 52 angeordnet ist und axial zum Aktorgehäuse durch den Grundkörper 51 begrenzt. Das Anschlussgehäuse 46 ist aus einem laserlichtdurchlässigen Material hergestellt, so dass das Anschlussgehäuse 46 im Bereich der Ausnehmung 52 durch eine umlaufende Laserschweißnaht 100 am Aktorgehäuse 11 befestigt werden kann.

Die Gehäusewand 98 weist an ihrer radialen Außenseite eine ringförmige radiale Einschnürung 102 auf, an die sich am axial vom Aktorgehäuse 11 weg weisenden Ende eine Erweiterung 104 anschließt. Die Gehäusewand 98 ist radial von einem Stützring 106 umgeben, dessen Zylinderwand 108 fest gegen die Erweiterung 104 anliegt. Die Einschnürung 102 dient dabei dazu, dass eine geringfügige federnde Verformung der Gehäusewand 98 in diesem Bereich möglich ist, so dass durch die Erweiterung 104 eine Klemmkraft auf den Stützring 106 ausgeübt wird. Am zum Aktorgehäuse 11 weisenden Ende schließt sich an die Zylinderwand 108 des Haltrings 106 eine radial nach außen weisende ringförmige Platte 110 an, die fest gegen den Grundkörper 51 des Anschlussgehäuses 46 anliegt. Am entgegengesetzten axialen Ende weist der Stützring 106 eine ringförmige nach radial innen weisende Platte 112 auf, deren Innendurchmesser geringfügig größer ist als der Außendurchmesser des Regelkörpers 66. Auf dieser Platte 112 liegt eine im Querschnitt V-förmige Dichtung 114 mit zwei Schenkeln auf, von denen der erste gegen die umfänglich geschlossene Mantelfläche 71 des Regelkörpers 66 anliegt und deren zweiter Schenkel gegen die radial begrenzende Gehäusewand 98 anliegt, so dass der Raum 96 im geschlossenen Zustand des Ventils ausschließlich über die Öffnungen 80 mit dem Einlass 60 im geschlossenen Zustand des Ventils verbunden ist.

Um auch den durch die Führungshülse 26 begrenzten Teil des Gehäuseinnenraums 82 zwischen dem Anker 32 und dem Kern 16 mit diesem Druck aus dem Einlass 60 zu versorgen und so ein druckausgeglichenes Ventil zu schaffen, sind am Außenumfang des Ankers 32 ein oder mehrere axial verlaufende Nuten 115 ausgebildet.

Um des Weiteren sicher zu stellen, dass bei Nichtbestromung der Spule 12 der Regelkörper 66 in seinen auf dem Ventilsitz 64 aufliegenden Zustand gestellt wird, ist im Innern des ersten Hohlkörpers 68 eine Schraubenfeder 116 angeordnet, die gegen die Platte 72 des ersten Hohlkörpers 68 gespannt aufliegt und deren entgegengesetztes axiales Ende gegen den Grundkörper 51 des Anschlussgehäuses 46 anliegt. Diese Schraubenfeder 116 wird durch einen sich in Richtung des Regelkörpers 80 axial erstreckenden ringförmigen Vorsprung 118 des Anschlussgehäuses 46 radial in ihrer Position gehalten. Hierzu weist der Vorsprung 118 einen Außendurchmesser auf, der geringfügig kleiner ist als der Innendurchmesser der Schraubenfeder 116.

In dem die Schraubenfeder 116 umgebenden Bereich, der axial gegenüberliegend zur Mantelfläche 71 des Regelkörpers 66 angeordnet ist, befindet sich am Grundkörper 51 des Anschlussgehäuses 46 ein zum Regelkörper 66 weisender elastischer Kunststoffring 120, der aus dem gleichen Material hergestellt ist wie der erste Dichtring 48. Dieser Kunststoffring 120 dient als Anschlag für den Regelkörper 66, wenn dieser in den geöffneten Zustand verschoben wird und dämpft dessen Bewegung und daraus folgend auch das entstehende Geräusch. Dieser Kunststoffring 120 ist über insgesamt fünf Verbindungskanäle 122, die den Grundkörper 51 axial durchdringen, mit dem ersten Dichtring 48 verbunden und wird entsprechend in einem Herstellungsschritt von der Seite des ersten Dichtrings 48 aus mit diesem zusammen angespritzt. Die Anzahl der vorzusehenden Verbindungskanäle 122 ist dabei abhängig von der Fließfähigkeit des Kunststoffs und der vorliegenden Konstruktion. Auch können die Verbindungskanäle schräg oder zumindest teilweise radial verlaufen, wenn die anzuspritzenden Kunststoffringe unterschiedliche Durchmesser aufweisen.

Von der gleichen axialen Seite des Grundkörpers 51 aus wird erfindungsgemäß auch ein zweiter Dichtring 124, der sich im radial äußeren Bereich des Grundkörpers 51 befindet, über fünf Durchgangsöffnungen 126 im Grundkörper 51 gespritzt. Dieser zweite Dichtring 124 weist somit zum Strömungsgehäuse 58 und wird bei der Befestigung des Ventils am Strömungsgehäuse 58 über das Aktorgehäuse 11 elastisch dichtend verformt. Für die Anzahl und Lage der Durchgangsöffnungen gilt dabei das Gleiche wie bereits für die Verbindungskanäle ausgeführt wurde

Über die beiden Dichtringe 48, 124 am Anschlussgehäuse 46 wird auf einfache Weise eine zuverlässige Abdichtung des Gehäuseinnenraums 82 nach außen hergestellt und gleichzeitig ein Eindringen von Gasen oder Flüssigkeiten von einem Außenraum 128 in den Aktor 10 des Ventils vermieden.

Das vom Einlass 60 über die Öffnungen 80 im Regelkörper 66 eindringende, verunreinigte und Öltropfen aufweisende Gas gelangt in den Gehäuseinnenraum 82, der durch das Anschlussgehäuse 46 und die Führungshülse 26 und den ersten Hohlkörper 68 begrenzt ist. Der Spalt zwischen dem Hohlkörper 68 und dem Anschlussgehäuse wird dabei von der V-förmigen Dichtung 114 abgedichtet und der Spalt 50 zwischen der Führungshülse 26 und dem Anschlussgehäuse 46 durch den ersten Dichtring 48. Somit kann kein Gas durch den Spalt 50 entlang des zweiten Rückschlussbleches 22 zwischen dem Rückschlussblech 22 und dem Joch 20 in Richtung der Spule 12 eindringen, die somit zuverlässig vor Korrosion geschützt ist.

Des Weiteren wird über den zweiten Dichtring 124 sichergestellt, dass kein Gas aus dem Strömungsgehäuse 58 in den Außenraum dingen kann. Zusätzlich wird durch die Laserschweißnaht 100 verhindert, dass Gas aus dem Außenraum 128 durch einen Spalt 130 zwischen dem Aktorgehäuse 11 und dem Anschlussgehäuse 46 in den Aktor 10 und somit zur Spule 12 eindringen kann.

Es wird somit ein dichtes Ventil geschaffen, welches durch die Verwendung des erfindungsgemäßen Anschlussgehäuses 46 einfach zusammengebaut und im montierten zustand am Strömungsgehäuse 58 befestigt werden kann.

Es sollte deutlich sein, dass der Schutzbereich der vorliegenden Erfindung nicht auf das beschriebene Ausführungsbeispiel begrenzt ist. Insbesondere kann beispielsweise statt der Laserschweißnaht ein zusätzlicher gegebenenfalls ebenfalls im Zweikomponenten-Spritzverfahren angebrachter Dichtring zur Abdichtung gegen von außen eindringendem Schmutz verwendet werden oder eine Ultraschallschweißung vorgenommen werden. Dies kann insbesondere einstückig mit dem zweiten Dichtring ausgeführt werden, indem die beiden Dichtringe über den Außenumfang des Grundkörpers miteinander verbunden sind. Auch können die Dichtringe als separate Ringe montiert werden. Die Verbindungskanäle oder Durchgangsöffnungen zur einseitigen Versorgung mit dem Material zur Herstellung der Dichtringe können je nach Lage auch schräg im Grundkörper ausgebildet sein oder teilweise radial verlaufen. Auch die Anzahl ist abhängig von der Fließfähigkeit des verwendeten Kunststoffs und der vorliegenden Konstruktion.

## Patentansprüche

1. Schubumluftventil für einen Verdichter eines Verbrennungsmotors mit einem Strömungsgehäuse (58) mit einem Einlass (60) und einem Auslass (62),
einem elektromagnetischen Aktor (10), der in einem Aktorgehäuse (11) angeordnet ist,
einem Regelkörper (66), der mittels des Aktors (10) bewegbar ist, einem Gehäuseinnenraum (82), in dem ein Anker (32) des elektromagnetischen Aktors (10) bewegbar ist
Öffnungen (80) im Regelkörper (66), über die der Gehäuseinnenraum (82) mit einem durch den Regelkörper (66) verschließbaren Kanal (63) im Strömungsgehäuse (58) fluidisch verbunden ist,
einem Anschlussgehäuse (46), welches axial gegen den Aktor (10) anliegt und zumindest teilweise den Gehäuseinnenraum (82) begrenzt,
**dadurch gekennzeichnet, dass**
am Anschlussgehäuse (46) ein erster Dichtring (48) angeordnet ist, der gegen den Aktor (10) anliegt und ein zweiter Dichtring (124) angeordnet ist, der auf der axial gegenüberliegenden Seite des Anschlussgehäuses (46) gegen das Strömungsgehäuse (58) anliegt, und dass an der zum Regelkörper (66) weisenden axialen Seite des Anschlussgehäuses (46) ein elastischer Kunststoffring (120) angeordnet ist, dessen Durchmesser dem Durchmesser des Regelkörpers (66) entspricht.

2. Schubumluftventil für einen Verdichter eines Verbrennungsmotors nach Anspruch 1,
**dadurch gekennzeichnet, dass**
der erste Dichtring (48) innerhalb einer radialen Erstreckung eines Rückschlussblechs (22) angeordnet ist, welches am zum Regelkörper (66) weisenden Ende des Aktors (10) angeordnet ist und magnetisch mit einem Joch (20) des Aktors (10) verbunden ist und der zweite Dichtring (124) radial außerhalb des Regelkörpers (66) angeordnet ist.

3. Schubumluftventil für einen Verdichter eines Verbrennungsmotors nach einem der Ansprüche 1 oder 2,
**dadurch gekennzeichnet, dass**
der erste Dichtring (48) gegen einen Kragen (42) einer Führungshülse (26) anliegt, die den Gehäuseinnenraum (82) innerhalb des Aktorgehäuses (11) begrenzt.

4. Schubumluftventil für einen Verdichter eines Verbrennungsmotors nach einem der vorhergehenden Ansprüche,
**dadurch gekennzeichnet, dass**
die Dichtringe (48, 124) und/oder der elastische Kunststoffring (120) am Anschlussgehäuse (46) angespritzt sind.

5. Schubumluftventil für einen Verdichter eines Verbrennungsmotors nach einem der vorhergehenden Ansprüche,
**dadurch gekennzeichnet, dass**
zwischen dem ersten Dichtring (48) und dem elastischen Kunststoffring (120) mindestens ein Verbindungskanal (122) ausgebildet ist, welcher das Anschlussgehäuse (46) axial durchdringt.

6. Schubumluftventil für einen Verdichter eines Verbrennungsmotors nach einem der vorhergehenden Ansprüche,
**dadurch gekennzeichnet, dass**
das Anschlussgehäuse (46) mit den Dichtringen (48, 124) und/oder dem Kunststoffring (120) ein 2-Komponenten-Kunststoff-Spritzgießteil ist.

7. Schubumluftventil für einen Verdichter eines Verbrennungsmotors nach Anspruch 6,
**dadurch gekennzeichnet, dass**
das Anschlussgehäuse (46) aus einem laserlichtdurchlässigen Kunststoff hergestellt ist und mit dem Aktorgehäuse (11) mittels Laserschweißen verbunden ist, wobei die Laserschweißnaht (100) radial zwischen den beiden Dichtringen (48, 124) angeordnet ist.

8. Schubumluftventil für einen Verdichter eines Verbrennungsmotors nach einem der Ansprüche 1 bis 6,
**dadurch gekennzeichnet, dass**
am Anschlussgehäuse (46) ein dritter Dichtring ausgebildet ist, der gegen das Aktorgehäuse (11) anliegt.

9. Schubumluftventil für einen Verdichter eines Verbrennungsmotors nach Anspruch 8,
**dadurch gekennzeichnet, dass**
der dritte Dichtring einstückig mit dem zweiten Dichtring (124) über einen Außenumfang eines Grundkörpers (51) des Anschlussgehäuses (46) angespritzt ist.

10. Schubumluftventil für einen Verdichter eines Verbrennungsmotors nach einem der vorhergehenden Ansprüche,
**dadurch gekennzeichnet, dass**
der zweite Dichtring (124) über mindestens eine Durchgangsöffnung (126) im Anschlussgehäuse (46) zur axial gegenüberliegenden Seite eines Grundkörpers (51) des Anschlussgehäuses (46) ragt.

11. Schubumluftventil für einen Verdichter eines Verbrennungsmotors nach einem der Ansprüche 7 oder 8,
**dadurch gekennzeichnet, dass**
am Anschlussgehäuse (46) eine zum Aktorgehäuse (11) gerichtete ringförmige Ausnehmung (52) ausgebildet ist, in die ein ringförmiger Vorsprung (54) des Aktorgehäuses (11) ragt, wobei die Laserschweißnaht (100) oder der dritte Dichtring zwischen der Ausnehmung (52) und dem Vorsprung (54) angeordnet ist.

12. Schubumluftventil für einen Verdichter eines Verbrennungsmotors nach einem der vorhergehenden Ansprüche,
**dadurch gekennzeichnet, dass**
am Grundkörper (51) des Anschlussgehäuses (46) ein sich in Richtung des Regelkörpers (66) axial erstreckender ringförmiger Vorsprung (118) ausgebildet ist, der von einer Feder (116) radial umgeben ist, die vorgespannt axial zwischen dem Grundkörper (51) und dem Regelkörper (66) angeordnet ist.

13. Schubumluftventil für einen Verdichter eines Verbrennungsmotors nach einem der vorhergehenden Ansprüche,
**dadurch gekennzeichnet, dass**
am Anschlussgehäuse (46) eine ringförmige, sich axial in Richtung des Regelkörpers (66) erstreckende Gehäusewand (98) ausgebildet ist, die radial von einem Stützring (106) umgeben ist, auf dem eine Dichtung (114) angeordnet ist, die radial innen gegen den Regelkörper (66) und radial außen gegen die Gehäusewand (98) anliegt.

14. Schubumluftventil für einen Verdichter eines Verbrennungsmotors nach Anspruch 13,
**dadurch gekennzeichnet, dass**
die Gehäusewand (98) in dem die Dichtung (114) umgebenden Bereich eine Einschnürung (102) aufweist, und am vom Aktorgehäuse (11) abgewandten axialen Ende eine radiale Erweiterung (104) aufweist, an der der Stützring (106) festgeklemmt ist.

## Claims

1. A divert-air valve for a compressor of an internal combustion engine, comprising
a flow housing (58) having an inlet (60) and an outlet (62),
an electromagnetic actuator (10) arranged in an actuator housing (11),
a control body (66) which can be moved by way of the actuator (10),
a housing interior (82) in which an armature (32) of the electromagnetic actuator (10) is movable,
openings (80) in the control body (66), via which openings the housing interior (82) is fluidically connected to a duct (63) adapted to be closed off by the control body (66) and arranged in the flow housing (58),
a connector housing (46) which bears axially against the actuator (10) and which at least partially delimits the housing interior (82),
**characterized in that**
the connector housing (46) has arranged on it a first sealing ring (48) which bears against the actuator (10), and a second sealing ring (124) which bears against the flow housing (58) on the axially opposite side of the connector housing (46), and **in that** an elastic plastic ring (120) is arranged on the axial side of the connection housing (46) facing toward the control body (66), the diameter of said plastic ring corresponding to the diameter of the control body (66).

2. The divert-air valve for a compressor of an internal combustion engine according to claim 1,
**characterized in that**
the first sealing ring (48) is arranged within a radial extension of a return plate (22) which is arranged at the end of the actuator (10) facing toward the control body (66) and which is magnetically connected to a yoke (20) of the actuator (10), and that the second sealing ring (124) is arranged radially outside the control body (66).

3. The divert-air valve for a compressor of an internal combustion engine according to claim 1 or 2,
**characterized in that**
the first sealing ring (48) bears onto a collar (42) of a guide sleeve (26) delimiting the housing interior (82) within the actuator housing (11).

4. The divert-air valve for a compressor of an internal combustion engine according to any one of the preceding claims,
**characterized in that**
the sealing rings (48,124) and/or the elastic plastic ring (120) are attached to the connection housing (46) by molding them into place.

5. The divert-air valve for a compressor of an internal combustion engine according to any one of the preceding claims,
**characterized in that**
at least one connection duct (122), axially traversing the connection housing (46), is formed between the first sealing ring (48) and the elastic plastic ring (120).

6. The divert-air valve for a compressor of an internal combustion engine according to any one of the preceding claims,
**characterized in that**
the connection housing (46) with the sealings (48,124) and/or the plastic ring (120) is a molded plastic part of a 2-component type.

7. The divert-air valve for a compressor of an internal combustion engine according to claim 6,
**characterized in that**
the connection housing (46) is produced from a laser-light-permeable plastic and is welded to the actuator housing (11) by laser welding, the laser welding seam (100) being arranged radially between the two sealing rings (48,124).

8. The divert-air valve for a compressor of an internal combustion engine according to any one of claims 1 to 6,
**characterized in that**
a third sealing ring is provided on the connection housing (46), said third sealing ring bearing against the actuator housing (11).

9. The divert-air valve for a compressor of an internal combustion engine according to claim 8,
**characterized in that**
the third sealing ring is integrally molded to the second sealing ring (124) via an outer circumference of a base body (51) of the connection housing (46).

10. The divert-air valve for a compressor of an internal combustion engine according to any one of the preceding claims,
**characterized in that**
the second sealing ring (124) extends via at least one through opening (126) in the connection housing (46) toward the axially opposite side of a base body (51) of the connection housing (46).

11. The divert-air valve for a compressor of an internal combustion engine according to any one of claims 7 or 8,
**characterized in that**
the connection housing (46) is formed with an annular recess (52) facing toward the actuator housing (11) and having an annular projection (54) of the actuator housing (11) extending into it, wherein the laser welding seam (100) or the third sealing ring are arranged between the recess (52) and the projection (54).

12. The divert-air valve for a compressor of an internal combustion engine according to any one of the preceding claims,
**characterized in that**
the base body (51) of the connection housing (46) is provided with an annular projection (118) extending axially in the direction of the control body (66) and being radially surrounded by a spring (116) which, being a biased state, is arranged axially between the base body (51) and the control body (66).

13. The divert-air valve for a compressor of an internal combustion engine according to any one of the preceding claims,
**characterized in that**
the connection housing (46) is provided with an annular housing wall (98) extending axially in the direction of the control body (66), wherein said housing wall is radially surrounded by a support ring (106) having arranged on it a sealing (114) which radially inside bears against the control body (66) and radially outside bears against the housing wall (98).

14. The divert-air valve for a compressor of an internal combustion engine according to claim 13,
**characterized in that**
the housing wall (98) comprises a constriction (102) in the region surrounding the sealing (114) and a radially widened portion (104) on the axial end facing away from the actuator housing (11), wherein said radially widened portion has the support ring (106) clamped to it.

## Revendications

1. Soupape de surpression pour compresseur d'un moteur à combustion interne avec
un boitier d'écoulement (58) avec une entrée (60) et une sortie (62),
un actionneur (10) électromagnétique disposé dans un boitier d'actionneur (11),
un corps de réglage (66) déplaçable per ledit actionneur (10),
un intérieur du boitier (82), dans lequel une armature (32) dudit actionneur (10) électromagnétique peut être déplacée,
des ouvertures (80) dans le corps de réglage (66), par lesquelles ledit intérieur du boitier (82) est en communication fluidique avec un canal (63) dans le boitier d'écoulement (58), ledit canal pouvant être fermé par le corps de réglage (66),
un boitier de raccord (46) axialement en appui sur ledit actionneur (10) et délimitant ledit intérieur du boitier (82) au moins partiellement,
**caractérisée en ce que**
une première bague (48) est disposée au boitier de raccord (46), ladite bague s'appuyant sur l'actionneur (10), et **en ce qu'**une deuxième bague (124) est disposée, qui s'appuie sur le boitier d'écoulement (58) sur la côté du boitier de raccord (46) axialement opposée, et **en ce qu'**un anneau en matière plastique (120) élastique est disposé sur la côté axiale du boitier de raccord (46) tournée vers le corps de réglage (66), le diamètre dudit anneau correspondant au diamètre du corps de réglage (66).

2. Soupape de surpression pour compresseur d'un moteur à combustion interne selon la revendication 1, **caractérisée en ce que** ladite première bague (48) est disposée au sein d'une dimension radiale d'une tôle de retour de fluxe (22), qui est disposée à l'extrémité de l'actionneur (10) dirigée vers le corps de réglage (66) et qui est en liaison magnétique avec une culasse (20) dudit actionneur (10), et **en ce que** la deuxième bague (124) est disposée radialement à l'extérieur du corps de réglage (66).

3. Soupape de surpression pour compresseur d'un moteur à combustion interne selon la revendication 1 ou 2, **caractérisée en ce que** la première bague (48) s'appuie sur un col (42) d'une douille de guidage (26) qui délimite l'intérieur du boitier (82) au sein du boitier (11) de l'actionneur.

4. Soupape de surpression pour compresseur d'un moteur à combustion interne selon l'une quelconque des revendications précédentes, **caractérisée en ce que** lesdites bagues (48, 124) et/ou ledit anneau en matière plastique (120) élastique sont moulés par injection au boitier de raccord (46).

5. Soupape de surpression pour compresseur d'un moteur à combustion interne selon l'une quelconque des revendications précédentes, **caractérisée en ce qu'**au moins un canal de liaison (122) est formé entre la première bague (48) et l'anneau en matière plastique (120) élastique, ledit canal axialement traversant le boitier de raccord (46).

6. Soupape de surpression pour compresseur d'un moteur à combustion interne selon l'une quelconque des revendications précédentes, **caractérisée en ce qu'**au moins le boitier de raccord (46) avec lesdites bagues (48, 124) et/ou ledit anneau (120) en matière plastique est une pièce en matière plastique venue d'injection à deux composants.

7. Soupape de surpression pour compresseur d'un moteur à combustion interne selon la revendication 6, **caractérisée en ce que** le boitier de raccord (46) est fabriqué d'une matière plastique transparente à la lumière laser et est joint avec le boitier d'actionneur (11) par soudage à laser, la soudure laser (100) étant disposée radialement entre les deux bagues (48, 124).

8. Soupape de surpression pour compresseur d'un moteur à combustion interne selon l'une quelconque des revendications 1 à 6, **caractérisée en ce qu'**une troisième bague est formée sur le boitier de raccord (46), la bague s'appuyant sur le boitier d'actionneur (11).

9. Soupape de surpression pour compresseur d'un moteur à combustion interne selon la revendication 8, **caractérisée en ce que** la troisième bague est moulée par injection, d'un seul tenant avec la deuxième bague (124), sur une circonférence extérieure du corps de base (51) du boitier de raccord (46).

10. Soupape de surpression pour compresseur d'un moteur à combustion interne selon l'une quelconque des revendications précédentes, **caractérisée en ce qu'**à travers au moins une ouverture de passage (126) dans le boitier de raccord (46), la deuxième bague (124) saille vers le côté axialement opposé d'un corps de base (51) du boitier de raccord (46).

11. Soupape de surpression pour compresseur d'un moteur à combustion interne selon la revendication 7 ou 8, **caractérisée en ce qu'**un évidement (52) annulaire dirigé vers le boitier d'actionneur (11) est formé sur le boitier de raccord (46), dans lequel évidement saille une saillie (54) annulaire du boitier d'actionneur (11), la soudure laser (100) ou la troisième bague étant disposée entre ledit évidement (52) et la saillie (54).

12. Soupape de surpression pour compresseur d'un moteur à combustion interne selon l'une quelconque des revendications précédentes, **caractérisée en ce qu'**une saillie (118) annulaire, s'étendant dans la direction axiale vers le corps de réglage (66), est formé sur le corps de base (51) du boitier de raccord (46), laquelle est entourée radialement par un ressort (116) dispose de manière sollicitée entre le corps de base (51) et le corps de réglage (66).

13. Soupape de surpression pour compresseur d'un moteur à combustion interne selon l'une quelconque des revendications précédentes, **caractérisée en ce qu'**une paroi de boitier (98) annulaire, s'étendant dans la direction axiale vers le corps de réglage (66), est formée sur le boitier de raccord (46), la paroi étant entourée radialement par un anneau de support (106) sur lequel un joint d'étanchéité (114) est disposée, qui s'appuie par son côté radialement intérieur sur le corps de réglage (66) et par son côté radialement extérieur sur la paroi de boitier (98).

14. Soupape de surpression pour compresseur d'un moteur à combustion interne selon la revendication 13, **caractérisée en ce que** la paroi (98) présent un rétrécissement (102) dans la région autour le joint d'étanchéité (114), et présent un élargissement (104) radial à l'extrémité axiale détournée du boitier d'actionneur (11), sur lequel l'anneau de support (106) est coincé.
